# EUROPÄISCHE PATENTSCHRIFT

(11) **EP 1 041 019 B1**
(45) Veröffentlichungstag und Bekanntmachung des Hinweises auf die Patenterteilung: **25.06.2003**
(21) Anmeldenummer: 00103493.3
(22) Anmeldetag: 01.03.2000
(51) Int. Cl.: B65G 17/34

(54) **Stückgut-(Stetig-)Fördereinrichtung**
Article conveyor system
Dispositif pour transporter des objets

(30) Priorität: 30.03.1999 DE 19914386
(43) Veröffentlichungstag der Anmeldung: 04.10.2000
(73) Patentinhaber: Beumer Maschinenfabrik GmbH & Co. KG, 59269 Beckum (DE)
(72) Erfinder: Arlt, Günter E., Dipl.-Wirtsch.-Ing., 33378 Rheda-Wiedenbrück (DE); Hintz, Andreas, Dr., Dipl.-Ing., 59269 Beckum (DE)
(74) Vertreter: Hoormann, Walter, Dr.-Ing.

(56) Entgegenhaltungen:
- EP-A- 0 739 831

## Beschreibung

Die vorliegende Erfindung betrifft eine zur Kategorie der Stetigförderer gehörende Fördereinrichtung in der Art einer Schienenbahn zum Transport von Stückgut, insb. in der Art eines Crossbelt-Sorters zum Sortieren von Stückgutteilen, bspw. Gepäckstücken, oder für ein Backtrack-Fördersystem, wobei die Stückgutteile jeweils an wenigstens einer Aufgabestelle (i.a. einzeln) auf einen von wenigstens einem Förderelement mit einer (ggf. zweiteiligen) Stütz- bzw. Tragfläche gebildeten Aufnahmeplatz aufzugeben und an einer Abgabestelle (ggf. einer vorgegebenen bzw. ausgewählten Abgabestelle von mehreren Abgabestellen) i.a. i.w. quer zur Förderrichtung seitlich wieder von der Fördereinrichtung abzugeben sind; wobei eine Vielzahl von einander in Förderrichtung nachgeordneten, wenigstens paar- bzw. gruppenweise gelenkig miteinander verbundenen und gemeinsam antreibbaren Förderelementen einen in sich geschlossenen, horizontal und/oder vertikal umlaufenden, entlang einer Führung geführten Förderstrang bilden, dessen Förderelemente jeweils eine von der Außenseite des Obertrums eines (Quer-)Gurtförderers gebildete Tragfläche bilden, und dessen quer zur Förderrichtung der Fördereinrichtung steuerbar antreibbarer Fördergurt aus seiner nicht-angetriebenen Förderstellung im Bereich der (jeweils vorgesehenen) Abgabestelle so anzutreiben ist, daß das vom jeweiligen (Quer-)Gurtförderer abgestützte und in Förderrichtung der Fördereinrichtung geförderte Stückgutteil zur vorgegebenen Abgabeseite hin zu fördern und dadurch von der Fördereinrichtung an der vorgegebenen Abgabestelle abzugeben ist, und wobei die Förderelemente jeweils an ihrem dem vorhergehenden bzw. dem nachfolgenden Förderelement zugekehrten Rand ihrer i.w. durch das Obertrum ihres (Quer-)Gurtförderers gebildeten Tragfläche mit einer in Förderrichtung der Fördereinrichtung gerichteten, i.w. horizontalen Stützplatte od.dgl. versehen sind, welche den zwischen den zwei beteiligten Förderelementen vorhandenen, spaltförmigen Zwischenraum wenigstens i.w. überdeckt.

Eine derartige, dem Oberbegriff des Anspruchs 1 entsprechende, Stückgut-Fördereinrichtung ist bspw. aus der EP 0 739 831 A2 bekannt. Bei diesem vorbekannten Förderer erstrecken sich (zur Überbrückung des zwischen zwei benachbarten Förderelementen vorhandenen Zwischenraums) von jedem quer zur Förderrichtung verlaufenden, dem vorhergehenden bzw. dem nachfolgenden Förderelement zugekehrten Rand jedes Förderelementes parallel zu der jeweils durch das Obertrum eines (Quer-)Gurtförderers gebildeten Tragfläche Stützplatten, wobei die beiden i.w. als gleichschenklige Dreiecke ausgebildeten Stützplatten so mit unterschiedlicher Höhe am Rahmen des (Quer-)Gurtförderers angeordnet sind, daß sie jeweils die benachbarte Stützplatte des benachbarten Tragelementes überlappen bzw. von dieser überlappt werden.

Dabei sei noch erwähnt, daß die jeweils einem benachbarten Förderelement zugekehrte Spitze jeder i.w. dreiecksförmigen Stützplatte mit Abstand zu dem betreffenden benachbarten Förderelement endet.

Obwohl bei dem aus der EP 0 700 844 B1 bekannten, gattungsähnlichen Förderer in den Horizontalkurven der Förderbahn jeweils zwischen einander benachbarten Förderelementen ganz erhebliche, in der Draufsicht i.w. dreiecksförmige Zwischenräume entstehen, durch welche während des Transportes ggf. Stückgut fallen kann, bzw. in welche in den gekrümmten Abschnitten der Horizontalkurven ggf. Teile bzw. Abschnitte des geförderten Stückgutes (bei einer Gepäckförderung bspw. die Riemen von Rucksäcken od.dgl.) gelangen kann, so daß es dann auf einem einem gekrümmten Förderstrangabschnitt in der Horizontalkurve nachfolgenden geraden Streckenabschnitt zum Einklemmen der Stückgutteile, und bei der Abgabe zu entsprechenden Problemen/Störungen bzw. sogar zu Beschädigungen des Stückgutes oder/und des Förderers kommen kann, ist diese Gefahr beim Förderer gem. der EP 0 739 831 A2 ersichtlich zwar geringer, da es in einem gekrümmten Förderabschnitt einer Horizontalkurve am äußeren Bogen der gekrümmten Förderstrecke zwangsläufig zu einer (erheblichen) Vergrößerung des bei linearer Förderung ohnehin vorhandenen dreiecksförmigen Spaltes zwischen zwei einander benachbarten Förderelementen kommt, der trotz der beiden Stützplatten je Förderelement vorhanden ist.

Der vorliegenden Erfindung liegt die Aufgabe zugrunde, die Fördereinrichtungen der eingangs beschriebenen Gattung insb. unter Vermeidung der vorstehend erwähnten Nachteile dahingehend zu verbessern, daß selbst bei Horizontalkurven mit relativ geringem Krümmungsradius kein (zumindest kein erheblicher) Zwischenraum zwischen einander jeweils benachbarten Förderelementen vorhanden ist.

Die Lösung dieser Aufgabe erfolgt erfindungsgemäß durch die im Kennzeichen des Anspruchs 1 angegebenen Merkmale.

Gemäß einer bevorzugten Ausgestaltung der vorliegenden Erfindung ist vorgesehen, daß die Stützplatte eines Förderelementes von dem (Quer-)Gurtförderer des benachbarten Förderers überlappt wird, und zwar bevorzugt so weit, daß auch noch in den Horizontalkurven mit kleinstem Krümmungsradius eine i.w. vollständige Überlappung vorliegt.

Zur Realisierung des obigen Erfindungsgedankens sind verschiedene Ausgestaltungen möglich. Eine erste Variante besteht darin, daß der vom (Quer-)Gurtförderer des benachbarten Förderelementes überlappte bzw. überdeckte bzw. "überdachte" Abschnitt einer Stützplatte zwischen dem Obertrum und dem Untertrum des betreffenden (Quer-)Gurtförderers angeordnet ist. Bei einer solchen Ausgestaltung kann der überlappte Abschnitt der Stützplatte sich in eine (Aufnahme-)Tasche des benachbarten Förderelementes erstrecken.

Dabei sind die (Aufnahme-)Taschen bevorzugt spaltförmig ausgebildet und i.w. horizontal angeordnet, wobei es zweckmäßig ist, wenn die Höhe der (Aufnahme-)Tasche nur geringfügig größer als die Dicke der Stützplatte im Bereich ihres Überlappungsabschnittes ist.

Bei einer Ausgestaltung, bei welcher das Obertrum des (Quer-)Gurtförderers eines Förderelementes jeweils auf einem Stützblech gleitbar abgestützt ist, ist bevorzugt vorgesehen, daß die (Aufnahme-)Tasche des benachbarten Förderelementes in dessen Stützblech angeordnet ist.

Auch hierfür sind wiederum verschiedene zweckmäßige Ausgestaltungsmöglichkeiten denkbar. So kann die (Aufnahme-)Tasche an ihrer Unterseite und an ihrer Oberseite von dem Stützblech begrenzt sein, dieses also wenigstens im Bereich der Stützplattenaufnahme taschenförmig ausgebildet sein.

Eine andere Möglichkeit besteht darin, daß die (Aufnahme-)Tasche an ihrer Unterseite von der Unterseite des Obertrums des (Quer-)Gurtförderers begrenzt ist.

Gemäß einer anderen, ebenfalls durchaus - je nach Einsatzfall - zweckmäßigen Ausgestaltung kann die (Aufnahme-)Tasche an ihrer Oberseite von dem Stützblech begrenzt sein und an ihrer Unterseite von einem fest an dem benachbarten Förderelement angeordneten, plattenförmigen Stützmittel.

Dabei sei an dieser Stelle ausdrücklich darauf verwiesen, daß der Begriff "Stützblech" zwar erkennbar darauf abstellt, daß dieses Bauteil i.d.R. aus Blech (also aus Metall) besteht, daß dieses aber ersichtlich keineswegs obligatorisch ist). Vielmehr kann ein "Stützblech" ggf. auch durchaus aus einem geeigneten Kunststoff oder einem sonstigen geeigneten Material bestehen.

Gemäß einer weiteren Ausgestaltung der vorliegenden Erfindung kann die Oberseite der Stützplatte wenigstens eine quer zur Förderrichtung der Fördereinrichtung bzw. in Förderrichtung des (Quer-)Gurtförderers verlaufende, vorzugsweise nutförmige Ausnehmung zur Aufnahme eines länglichen Führungsmittels wie z.B./insb. eines Keilriemens aufweisen, wobei es bei Anordnung nur eines Führungsmittels besonders zweckmäßig ist, wenn dieses - in Förderrichtung gesehen - an demjenigen Endabschnitt des Förderelementes angeordnet ist, an dem keine (Aufnahme-)Tasche angeordnet ist.

Um die erfindungsgemäße Fördereinrichtung ggf. auch auf einer Förderbahn mit vertikalen Förderabschnitten einsetzen zu können, können die Stützplatten ggf. elastisch ausgebildet sein und bspw. aus einem (vorzugsweise armierten) Gummimaterial od.dgl., oder aber auch aus einem Blech (insb. Stahlblech) bestehen.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
- **Fig. 1**: eine schematisierte Teilansicht auf eine erfindungsgemäße Fördereinrichtung (genauer gesagt auf zwei einander benachbarte Förderelemente), teilweise im Schnitt, in Richtung des Pfeiles I-I in Fig. 2 gesehen;
- **Fig. 2**: eine Draufsicht auf die Anordnung gem. Fig. 1 in Richtung des Pfeiles II in Fig. I gesehen;
- **Fig. 3**: eine Darstellung gem. Fig. 1 von einer erfindungsgemäßen Variante;
- **Fig. 4**: eine Darstellung gem. den Fig. 1 und 3 in einer weiteren erfindungsgemäßen Variante;
- **Fig. 5**: eine Teildraufsicht auf einen aus drei aufeinander folgenden Förderelementen bestehenden Abschnitt einer erfindungsgemäßen Fördereinrichtung im Bereiche einer horizontalen S-Kurve;
- **Fig. 6a**: die beiden im linken Teil von Fig. 5 etwas schematisiert dargestellten Förderelemente in gegenüber Fig. 5 etwas vergrößerter, detaillierterer Darstellung;
- **Fig. 6b**: eine Fig. 6a entsprechende Darstellung der beiden im rechten Teil von Fig. 5 dargestellten Förderelemente;
- **Fig. 7 - 15**: Einzelheiten erfindungsgemäßer Förderelemente in z.T. unterschiedlicher Ausgestaltung; und
- **Fig. 16**: eine in Förderrichtung gesehene Ansicht eines Förderelementes gem. Fig. 6b, teilweise im Schnitt, in Richtung jeweils des Pfeiles XVI in Fig. 6b gesehen, also insb. des (Quer-)Gurtförderers eines als sog. Crossbelt ausgebildeten Förderelementes.

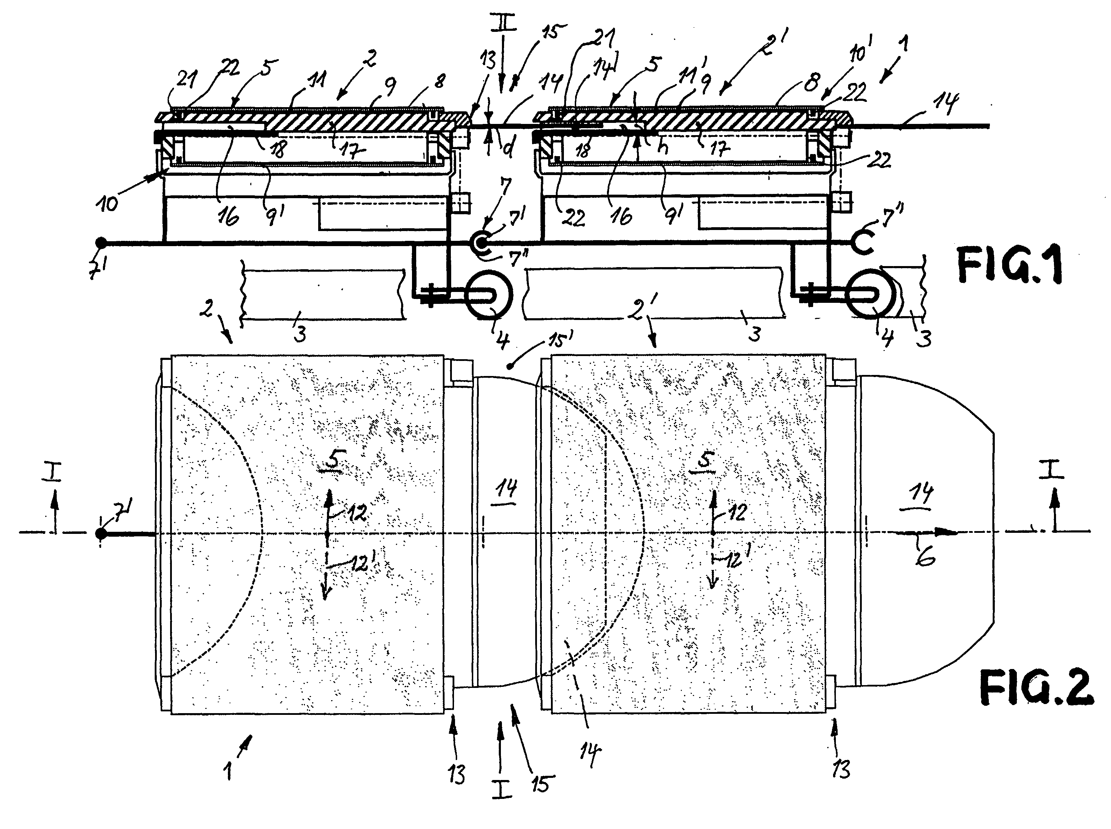

Die Fig. 1 und 2 zeigen (zwecks besserer Verdeutlichung schematisiert) einen aus zwei Förderelementen 2 bestehenden Abschnitt einer erfindungsgemäßen Fördereinrichtung 1 zum Transport von nicht dargestelltem Stückgut. Da die Förderelemente 2 an einer der vorgegebenen Förderbahn folgenden bzw. diese festlegenden Schiene 3 mit Laufrollen 4 geführt sind, spricht man bei der Fördereinrichtung auch von einer sog. Schienenbahn.

Die erfindungsgemäße Fördereinrichtung 1 kann für zahlreiche fördertechnisch höchst unterschiedliche Förderaufgaben vorteilhaft eingesetzt werden, bspw. zum Sortieren von Stückgutteilen (bspw. von Gepäckstücken auf einem Flughafen), oder aber bspw. auch für ein sog. Backtrack-Fördersystem.

In jedem Falle werden die zu transportierenden Stückgutteile (i.a. einzeln) jeweils an einer nicht dargestellten Aufgabestelle auf den Förderer 1 aufgegeben (wobei insb. bei Sortern ggf. auch zwei oder noch mehr Aufgabestellen vorhanden sein können), und zwar jeweils auf eine Trag- bzw. Stützfläche 5, die von wenigstens einem Förderelement 2 gebildet ist (wobei bei einem Sorter als Tragfläche 5 bzw. Aufnahmeplatz für ein Stückgutteil i.d.R. nicht mehr als zwei einander benachbarte Förderelemente 2 verwendet werden, insb. für andere Förderaufgaben aber ggf. auch durchaus mehr als zwei Förderelemente 2 den Aufnahmeplatz/die Tragfläche 5 für ein Stückgutteil bilden können).

Ein an einer Aufgabestelle aufgegebenes Stückgutteil wird sodann mit Abstand zur Aufgabestelle an einer Abgabestelle (bei einem Sorter ggf. einer vorgegebenen bzw. ausgewählten Abgabestelle von mehreren Abgabestellen) i.a. i.w. quer zur Förderrichtung 6 seitlich wieder von der Fördereinrichtung 1 abgegeben.

Der gesamte Förderstrang besteht aus einer Vielzahl von einander in Förderrichtung 6 nachgeordneten, wenigstens paar- bzw. gruppenweise gelenkig miteinander verbundenen und gemeinsam antreibbaren Förderelementen 2, die einen in sich geschlossenen, horizontal und/oder vertikal umlaufenden, entlang der (Schienen-)Führung 3 geführten Förderstrang bilden. In Fig. 1 ist ein solches Gelenk 7 erkennbar. Je nach Verlauf des Förderstrangs kann es sich dabei -um ein Kardan- oder Kugelgelenk handeln, im letzteren Falle bestehend aus einem Kugelkopf 7' und aus einer Kugelschale 7".

Der Antrieb, bei dem es sich bevorzugt um einen Linearantrieb handelt, ist als bekannte Antriebseinrichtung zur Entlastung der Zeichnung nicht im einzelnen dargestellt.

Die Tragfläche 5 jedes Förderelementes 2 wird von der Außenseite 8 des Obertrums 9 eines (Quer-)Gurtförderers 10 gebildet, wie er bspw. aus der EP 0 393 773 B1 als sog. Crossbelt-Förderer bekannt ist. Dabei steht der Fördergurt 11 jedes i.w. ein Förderelement 2 bildenden Gurtförderers 10 während des Transportes still, wobei die Außenseite 8 des Obertrums 9 die Tragfläche 5 bildet. Der Fördergurt 11, dessen Förderrichtung 12 bzw. 12' quer zur Förderrichtung 6 der Fördereinrichtung 1 verläuft, ist steuerbar antreibbar, so daß er aus seiner nicht-angetriebenen Förderstellung im Bereich der jeweils vorhandenen bzw. vorgesehenen Abgabestelle so anzutreiben ist, daß das von dem jeweiligen (Quer-)Gurtförderer 10 abgestützte und in Förderrichtung 6 der Fördereinrichtung 1 geförderte Stückgutteil zur vorgegebenen Abgabeseite hin zu fördern und dadurch von der Fördereinrichtung 1 an der vorgegebenen Abgabestelle entweder in Richtung des Pfeiles 12 oder in Richtung des Pfeiles 12' abzugeben ist.

Die Förderelemente 2 sind jeweils an ihrem dem vorhergehenden bzw. dem nachfolgenden Förderelement 2 zugekehrten (Quer-)Rand 13 ihrer (i.w. durch das Obertrum 9 ihres (Quer-) Gurtförderers 10 gebildeten) Tragfläche 5 mit einer in Förderrichtung 6 der Fördereinrichtung 1 gerichteten, horizontalen Stützplatte 14 versehen, welche den zwischen den zwei beteiligten Förderelementen 2, 2 vorhandenen, spaltförmigen Zwischenraum 15 (bis auf unerhebliche Randabschnitte 15') i.w. überdeckt.

Erfindungsgemäß weist jedes Förderelement 2 nur an einem i.w. quer bzw. rechtwinklig zur Förderrichtung 6 der Fördereinrichtung 1 verlaufenden Querrand 13 eine Stützplatte 14 auf, die sich so weit in Förderrichtung 6 der Fördereinrichtung 1 in den Bereich des benachbarten Förderelementes 2' erstreckt, daß sie von diesem überlappt wird, und zwar von dem (Quer-) Gurtförderer 10' des benachbarten Förderelementes 2', und weiterhin so weit, daß auch noch in den Horizontalkurven der Förderbahn mit kleinstem Krümmungsradius, wo sich die größten (i.w. dreiecksförmigen) spaltförmigen Zwischenräume 15 einstellen, i.w. noch eine vollständige Überlappung vorhanden ist.

Die erfindungsgemäße Ausbildung bewirkt mithin - trotz vorhandener Horizontalkurven und ggf. auch sogar vorhandener Vertikalkurven -, daß stets eine i.w. geschlossene Förderbahn bzw. Tragebene vorhanden ist, so daß es nicht zu den wie oben geschilderten Nachteilen im Stand der Technik kommen kann. Dabei wird dieses in höchst zweckmäßiger Weise - bspw. abweichend zum Förderer gem. der EP 0 739 831 A2 - sogar mit lediglich einer einzigen Stützplatte 14 je Förderelement 2 bewirkt.

Bei der in den Fig. 1 und 2 beispielhaft wiedergegebenen Ausführung ist der von dem (Quer-) Gurtförderer 10' des benachbarten Förderelementes 2' überlappte Abschnitt 14' der Stützplatte 14 in einer (Aufnahme-)Tasche 16 angeordnet, die an ihrer Oberseite von einem Stützblech 17 für den Fördergurt 11 begrenzt ist, und an ihrer Unterseite von einem fest an dem benachbarten Förderelement 2' angeordneten, plattenförmigen Stützmittel 18.

Ganz allgemein gesprochen, ist der von dem (Quer-)Gurtförderer 10' des benachbarten Förderelementes 2' überlappte Abschnitt der am nachfolgenden Förderelement 2 angeordneten Stützplatte 14 zwischen dem Obertrum 9 und dem Untertrum 9' des betreffenden (Quer-) Gurtförderers 10' angeordnet, und die (Aufnahme-)Tasche 16 ist spaltförmig sowie parallel zur Tragfläche 5 verlaufend angeordnet, wobei die Höhe h einer Tasche 16 nur geringfügig größer als die Dicke d der zugeordneten Stützplatte 14 im Bereich ihres Überlappungsabschnittes 14' ist, die bei den dargestellten Ausführungsbeispielen durchgehend gleich groß ist.

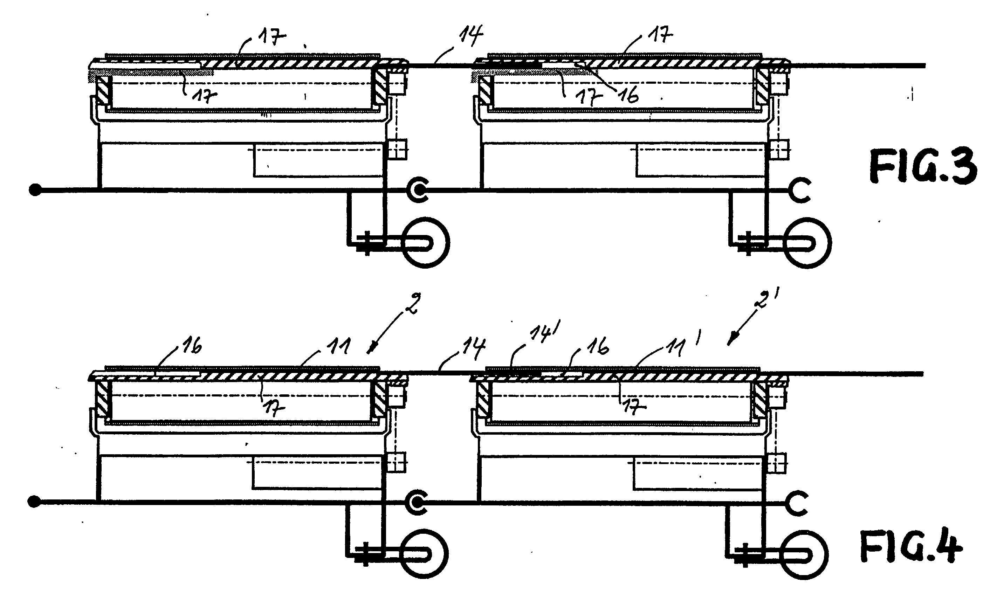

Da es bei derartigen Crossbelt-Förderem zweckmäßig ist, das Obertrum 9 (und damit das ggf. geförderte/abgestützte Stückgutteil) gleitbar auf einem Stützblech 17 abzustützen, kann die Tasche 16 (bei entsprechender Dimensionierung des Stützbleches 17) - wie bereits beispielhaft ausgeführt - im Stützblech 17 angeordnet bzw. ausgebildet sein, wobei sie - insoweit abweichend von der Ausbildung gem. Fig. 1 - ggf. sowohl an ihrer Unterseite als auch an ihrer Oberseite von dem Stützblech 17 begrenzt sein kann, wie dieses in Fig. 3 mit dem Hinweis angedeutet ist, daß der kreuzschraffierte untere Abschnitt des Stützbleches 17, der bei der Ausgestaltung gem. Fig. 1 durch ein gesondertes plattenförmiges Stützmittel 18 gebildet wird, integraler oder montierter Bestandteil des Stützbleches 17 ist. Im übrigen stimmt die Ausbildung gem. Fig. 3 mit derjenigen gem. Fig. 1 überein.

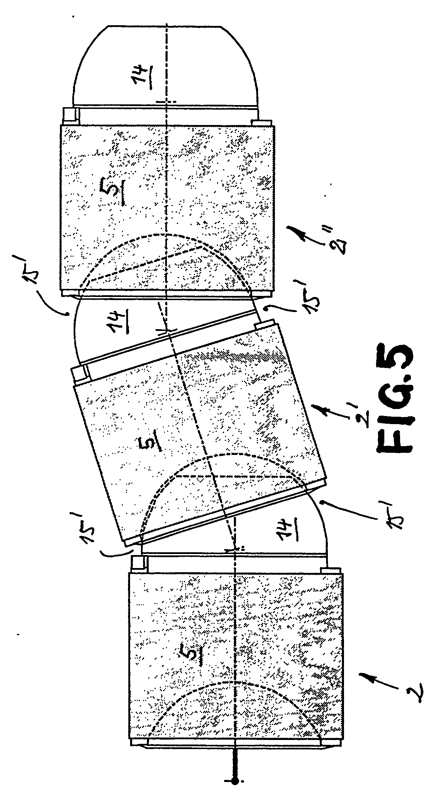

Fig. 4 zeigt eine weitere Variante, bei welcher die (Aufnahme-)Tasche 16 an ihrer Unterseite von dem Stützblech 17 und an ihrer Oberseite von der Unterseite des Obertrums 9 des (Quer-) Gurtförderers 10' bzw. dessen Fördergurtes 11' begrenzt ist.

Fig. 5 zeigt in einer Fig. 2 entsprechenden (jedoch gegenüber Fig. 2 etwas verkleinerten) Darstellung eine Draufsicht auf drei Förderelemente 2 im Bereich einer S-förmigen Horizontalkurve. Es ist zu erkennen, daß der Zwischenraum 15 zwischen zwei einander benachbarten Förderelementen 2, 2' bzw. 2', 2" selbst bei maximal möglicher Verschwenkung zweier einander benachbarter Förderelemente in einer Horizontalkurve (also einer Horizontalkurve mit annähernd dem geringsten möglichen Krümmungsradius) verschwindend klein ist. Lediglich die völlig unkritischen Randabschnitte 15' weisen überhaupt einen äußerst geringen "Zwischenraum" 15 auf, der jedoch i.w. lediglich so groß ist wie auf linearen Streckenabschnitten.

Die Fig. 6a und 6b zeigen die beiden linken Förderelemente 2,2' der Darstellung gem. Fig. 5 in einer geringfügig vergrößerten, konstruktiv mehr ausgearbeiteten Darstellung, wobei sich jedoch die Stützplatten 14 jeweils zur anderen Seite hin erstrecken, die Förderrichtung 6 also umgekehrt ist wie in Fig. 2 mit einem Pfeil angegeben.

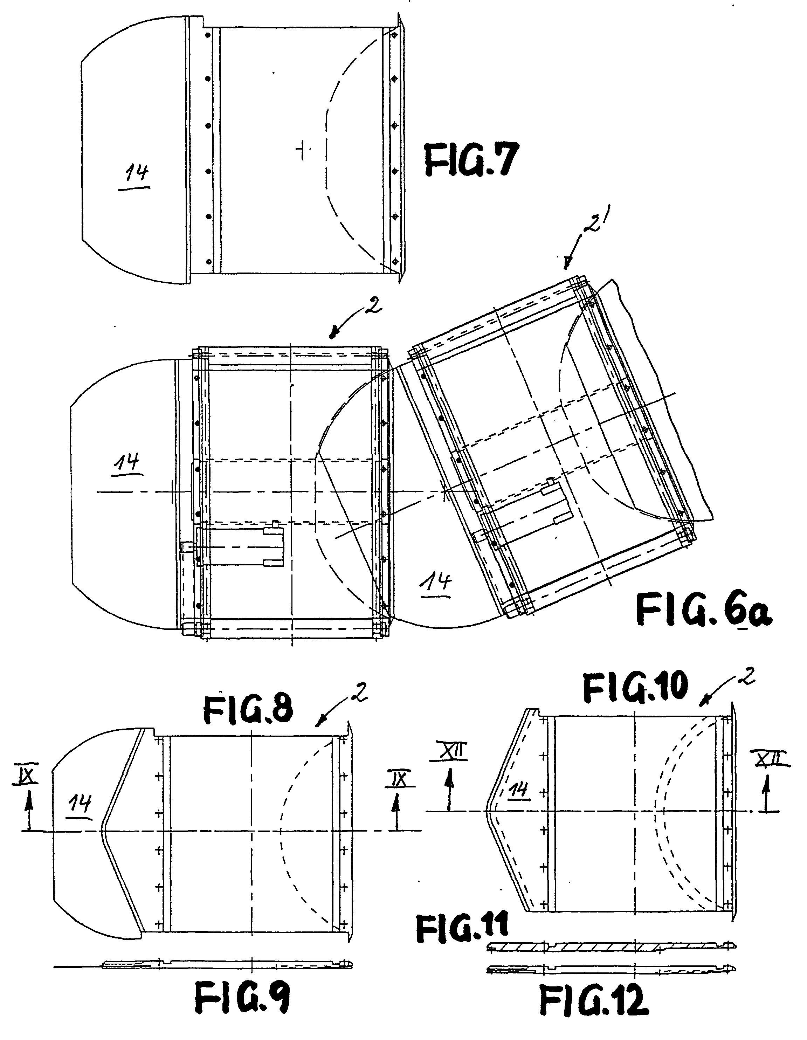

Die Fig. 7 bis 15 zeigen konstruktive Einzelheiten der Darstellung gem. den Fig. 6a, 6b, die für den zuständigen Fachmann ohne weiteres verständlich sind und daher keiner gesonderten Kommentierung bedürfen.

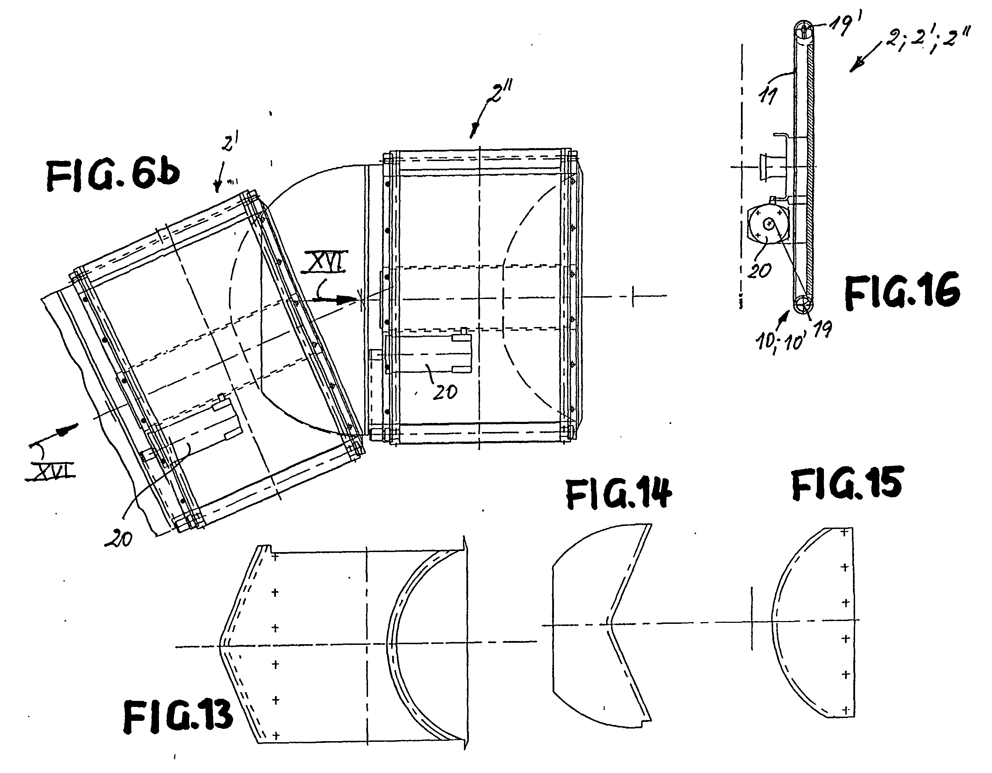

Bzgl. Fig. 16 sei lediglich noch darauf hingewiesen, daß diese Zeichnungsfigur eine Ansicht eines Förderelementes 2 bzw. 2' bzw. 2" in Richtung eines Pfeiles XVI in Fig. 6b zeigt. In dieser Darstellung sind außer dem Fördergurt 11 auch die Umlenkrollen 19, 19' des (Quer-) Gurtförderers 10 bzw. 10' zu erkennen, wobei weiterhin erkennbar ist, daß die Umlenkrolle 19 von einem steuerbaren Antrieb 20 antreibbar ist.

Insbesondere unter Bezugnahme auf die Fig. 1 sei noch nachgetragen, daß die Oberseite der Stützplatte 14 mit einer quer zur Förderrichtung 6 der Fördereinrichtung 1 bzw. in Förderrichtung 12, 12' des (Quer-)Gurtförderers 10 bzw. 10' verlaufende, vorzugsweise nutförmige Ausnehmung 21 zur Aufnahme eines länglichen Führungsmittels 22 in der Art eines Keilriemens od.dgl. aufweist, der mit der Laufseite des Fördergurtes 9 (also der Unterseite des Obertrums 8) in reibschlüssigem Eingriff ist.

Weiterhin sei noch nachgetragen, daß geschlossene (Aufnahme-)Taschen 16, wie sie bei den Ausgestaltungen gem. den Fig. 1 und 3 vorgesehen sind, grundsätzlich die Gefahr in sich bergen, daß insb. nach längerer Betriebszeit durch eine Verschmutzung der Tasche 16 oder/und eine Deformation der oberhalb des Abschnittes 14' der Stützplatte 14 befindlichen Taschenabdeckung ggf. zu einem Einklemmen der Stützplatte 14 kommen kann. Dieses ist bei der Ausgestaltung gem. Fig. 4, bei welcher der Fördergurt 11 bzw. 11' selbst die obere Abdekkung bzw. Überlappung für den Abschnitt 14' der betreffenden Stützplatte 14 bildet, ersichtlich nicht möglich, da die Taschen 16 dabei zum Fördergurt 10 bzw. 10' hin offen sind. Außerdem ist eine solche Ausbildung auch fertigungstechnisch preiswerter herzustellen.

Unter Bezugnahme auf den etwas weiter oben erwähnten Keilriemen 22 sei noch darauf verwiesen, daß dieser zweckmäßigerweise an demjenigen Rand des Förderelementes 2 bzw. 2' angeordnet ist (wenn nur ein einziger Keilriemen vorgesehen ist), an dem keine Stützplatte 14 zu befestigen ist. Wie auch in Fig. 1 ersichtlich ist, kann jedes Förderelement 2 bzw. 2' bzw. 2'' jedoch auch mit zwei (oder ggf. auch mehr) Führungs-Keilriemen 22 versehen sein.

Schließlich sei noch darauf verwiesen, daß die Stützplatten 14 nicht notwendigerweise i.w. stark ausgebildet sein müssen, sondern in vorteilhafter Weise wie bei der Ausbildung gem. Fig. 1 z.B. aus einem dünnen Stahlblech oder armiertem gummiartigem Material bestehen können, so daß sie in Vertikalkurven entsprechend elastisch verformbar sind, und die erfindungsgemäße Fördereinrichtung mithin auch für Einsatzfälle geeignet ist, bei denen die Förderbahn nicht nur Horizontalkurven, sondern auch Vertikalkurven durchläuft.

### Bezugszeichenliste

- 1: Fördereinrichtung
- 2; 2'; 2": Förderelemente
- 3: Schiene
- 4: Laufrollen
- 5: Tragflächen
- 6: Pfeil (Förderrichtung von 1)
- 7: Gelenk
- 7': Kugelkopf
- 7": Kugelschale
- 8: Außenseite (von 9)
- 9: Obertrum (von 10 bzw. 11)
- 9': Untertrum (von 10 bzw. 11)
- 10; 10': (Quer-)Gurtförderer
- 11; 11': Fördergurt (von 10)
- 12; 12': Förderrichtung (von 10)
- 13: Querrand
- 14: Stützplatte
- 14': überlappter Abschnitt (von 14)
- 15: Zwischenraum (zw. 2/2)
- 15': Randabschnitt (von 15)
- 16: (Aufnahme-)Tasche
- 17: Stützblech (für 11)
- 18: plattenförmiges Stützmittel
- 19; 19': Umlenkrollen (von 10; 10')
- 20: Antrieb (für 19)
- 21: nutförmiges Ausnehmung (in 14)
- 22: Führungsmittel (Keilriemen)

## Patentansprüche

1. Fördereinrichtung (1) in der Art einer Schienenbahn zum Transport von Stückgut, insb. zum Sortieren von Stückgutteilen, bspw. Gepäckstücken, oder für ein Backtrack-Fördersystem, wobei die Stückgutteile jeweils an einer Aufgabestelle i.a. einzeln, auf einen von wenigstens einem Förderelement (2) mit einer Tragfläche (5) gebildeten Aufnahmeplatz aufzugeben und an einer Abgabestelle seitlich wieder von der Fördereinrichtung (1) abzugeben sind, wobei eine Vielzahl von einander in Förderrichtung (6) nachgeordneten, wenigstens paar- bzw. gruppenweise gelenkig miteinander verbundenen und gemeinsam antreibbaren Förderelementen (2, 2', 2'') einen in sich geschlossenen, horizontal und/oder vertikal umlaufenden, entlang einer Führung (3) geführten Förderstrang bilden, dessen Förderelemente (2) jeweils eine von der Außenseite (8) des an seiner Innenseite auf einem Gleitblech (17) abgestützten Obertrums (9) eines Quergurtförderers (10, 10') gebildete Tragfläche (5) bilden, und dessen quer zur Förderrichtung (6) der Fördereinrichtung (1) steuerbar antreibbarer Fördergurt (11) aus einer nicht-angetriebenen Förderstellung im Bereich der jeweiligen Abgabestelle so anzutreiben ist, daß ein von einem Quergurtförderer (10) abgestütztes und in Förderrichtung (6) der Fördereinrichtung (1) gefördertes Stückgutteil zur vorgegebenen Abgabestelle zu fördern und dadurch von der Fördereinrichtung (1) an der vorgegebenen Abgabestelle abzugeben ist, und wobei die Förderelemente (2) an einem i.w. rechtwinklig zur Förderrichtung (6) der Fördereinrichtung (1) verlaufenden Querrand (13) ihrer Tragfläche (5) mit einer in Förderrichtung (6) der Fördereinrichtung (1) gerichteten, horizontalen Stützplatte (14) od.dgl. versehen sind, welche den jeweils zwischen zwei einander benachbarten Förderelementen (2, 2'; 2', 2") vorhandenen spaltförmigen Zwischenraum (15) wenigstens i.w. überdeckt, und sich so weit in Förderrichtung (6) der Fördereinrichtung (1) in den Bereich des benachbarten Förderelementes (2') erstreckt, daß letzteres und die Stützplatte (14) des benachbarten Förderelementes (2) einander überlappen, **dadurch gekennzeichnet, daß** die Stützplatte (14) eines Förderelementes (2) jeweils von dem Quergurtförderer (10') des benachbarten Förderelementes (2') überlappt wird, und sich zwischen dem Obertrum (9) und dem Untertrum (9') des betreffenden Quergurtförderers (10') in eine spaltförmig ausgebildete und i.w. parallel zur Tragfläche (5) angeordnete, wenigstens teilweise von dem Gleitblech (17) dieses Quergurtförderers (10') gebildete Aufnahmetasche (16) des benachbarten Förderelementes (2') erstreckt.

2. Fördereinrichtung nach Anspruch 1, **dadurch gekennzeichnet, daß** die Aufnahmetasche (16) an ihrer Unterseite von dem Gleitblech (17) und an ihrer Oberseite von der Unterseite des Obertrums (9) des Quergurtförderers (10') begrenzt ist.

3. Fördereinrichtung nach Anspruch 1, **dadurch gekennzeichnet, daß** die Aufnahmetasche (16) an ihrer Unterseite und an ihrer Oberseite von dem Gleitblech (17) begrenzt ist.

4. Fördereinrichtung nach Anspruch 1, **dadurch gekennzeichnet, daß** die Aufnahmetasche (16) an ihrer Oberseite von dem Gleitblech (17) begrenzt ist, und an ihrer Unterseite von einem fest an dem benachbarten Förderelement (2') angeordneten, plattenförmigen Stützmittel (18).

5. Fördereinrichtung nach einem der vorhergehenden Ansprüche, **dadurch gekennzeichnet, daß** die Höhe (h) der Aufnahmetasche (16) nur geringfügig größer als die Dicke (d) der Stützplatte (14) im Bereich ihres Überlappungsabschnittes (14') ist.

6. Fördereinrichtung nach einem oder mehreren der vorhergehenden Ansprüche, **dadurch gekennzeichnet, daß** die Stützplatten (14) bei einer Fördereinrichtung (1), deren Förderstrang wenigstens eine Vertikalkurve durchfährt, elastisch ausgebildet sind.

7. Fördereinrichtung nach Anspruch 6, **dadurch gekennzeichnet, daß** die Stützplatten (14) aus ggf. armiertem Gummimaterial bestehen.

8. Fördereinrichtung nach Anspruch 6, **dadurch gekennzeichnet, daß** die Stützplatten (14) aus dünnem Blech, insb. Stahlblech, bestehen.

9. Fördereinrichtung nach einem oder mehreren der vorhergehenden Ansprüche, **dadurch gekennzeichnet, daß** die Gleitplatte (14) jedes Förderelementes (2) soweit überlappt wird, daß auch in den Horizontalkurven mit kleinstem Krümmungsradius eine i.w. vollständige Überlappung und damit eine i.w. geschlossene Tragfläche gegeben ist.

10. Fördereinrichtung nach Anspruch 3 oder 4, **dadurch gekennzeichnet, daß** die Oberseite der Stützplatte (14) jeweils wenigstens eine quer zur Förderrichtung (6) der Fördereinrichtung (1) bzw. in Förderrichtung (12, 12') des Quergurtförderers (10, 10') verlaufende, vorzugsweise nutförmige Ausnehmung (21) zur Aufnahme eines länglichen Führungsmittels (22) wie z.B./insb. eines Keilriemens aufweist, mittels dessen ein seitliches Verschieben des Querfördergurtes (11) zu verhindern bzw. zu reduzieren ist.

11. Fördereinrichtung nach Anspruch 10, **dadurch gekennzeichnet, daß** bei Anordnung nur eines Führungsmittels (22) das Führungsmittel (22) - in Förderrichtung (6) der Fördereinrichtung (1) gesehen - an dem Endabschnitt des Förderelementes (2) angeordnet ist, an dem keine Aufnahmetasche (16) angeordnet bzw. ausgebildet ist.

## Claims

1. A conveyor device (1) after the style of a rail track for the transport of unit loads, more particularly for sorting unit load parts, for example pieces of baggage, or for a backtrack conveying system, wherein the unit load parts are each loaded at a loading station, inter alia singly, on to a receiving place formed by at least one conveyor element (2) having a carrying surface (5), and are unloaded laterally from the conveyor device (1) at an unloading station, wherein a plurality of conveying elements (2, 2', 2") disposed successively in the conveying direction (6) and drivable jointly and pivotally interconnected at least in pairs or groups form a closed horizontally and/or vertically revolving conveyor run guided along a guide (3), the conveying elements (2) of said run each forming a carrying surface (5) formed by the outside of that top run (9) of a transverse belt conveyor (10, 10') which is supported on a sliding plate (17) at its inside, and of which the conveyor belt (11) controllably drivable transversely of the conveying direction (6) of the conveyor device (1) is so driven from a non-driven conveying position in the region of the respective unloading station that a unit load part supported by a transverse belt conveyor (10) and conveyed in the conveying direction (6) of the conveyor device (1) is conveyed to the predetermined unloading station and thus unloaded from the conveyor device (1) at the predetermined unloading station, and wherein the conveying elements (2) are provided, at a transverse edge (13) of their carrying surface (5) extending substantially at right angles to the conveying direction (6) of the conveyor device (1), with a horizontal support plate (14) or the like directed in the conveying direction (6) of the conveyor device (1), said support plate (14) at least substantially covering the intermediate space (15) in the form of a gap between each two adjacent conveying elements (2, 2'; 2', 2"), and extending in the conveying direction (6) of the conveyor device (1) into the zone of the adjacent conveying element (2') to an extent such that the latter and the support plate (14) of the adjacent conveying element (2) overlap one another, **characterised in that** the support plate (14) of a conveying element (2) is overlapped in each case by the transverse belt conveyor (10') of the adjacent conveying element (2') and extends, between the top run (9) and the bottom run (9') of the associated transverse belt conveyor (10'), into a receiving pocket (16) of the adjacent conveying element (2'), said pocket being formed at least partially by the sliding plate (17) of said transverse belt conveyor (10') and being disposed in the form of a gap substantially parallel to the carrying surface (5).

2. A conveyor device according to claim 1, **characterised in that** the receiving pocket (16) is bounded at its underside by the sliding plate (17) and at its top by the underside of the top run (9) of the transverse belt conveyor (10').

3. A conveyor device according to claim 1, **characterised in that** the receiving pocket (16) is bounded by the sliding plate (17) at its underside and at its top.

4. A conveyor device according to claim 1, **characterised in that** the receiving pocket (16) is bounded at its top by the sliding plate (17) and at its underside by a support means (18) in the form of a plate disposed fixedly on the adjacent conveying element (2').

5. A conveyor device according to any one of the preceding claims, **characterised in that** the height h of the receiving pocket (16) is only slightly larger than the thickness (d) of the support plate (14) in the region of its overlap portion (14').

6. A conveyor device according to any one or more of the preceding claims, **characterised in that** the support plates (14) are of elastic construction in a conveyor device (1) in which the conveying run travels through at least one vertical curve.

7. A conveyor device according to claim 6, **characterised in that** the support plates (14) consist of rubber material which may be reinforced if required.

8. A conveyor device according to claim 6, **characterised in that** the support plates (14) consist of thin metal sheeting, particularly steel sheet.

9. A conveyor device according to any one or more of the preceding claims, **characterised in that** the sliding plate (14) of each conveying element (2) is overlapped to an extent such that a substantially complete overlap and hence a substantially closed carrying surface is obtained even in the horizontal curves having the smallest radius of curvature.

10. A conveyor device according to claim 3 or 4, **characterised in that** the top of the support plate (14) has in each case at least one recess (21) preferably in the form of a groove extending transversely of the conveying direction (6) of the conveyor device (1) or in the conveying direction (12, 12') of the transverse belt conveyor (10, 10'), said recess being intended to receive an elongate guide means (22) such as, for example, particularly a V-belt, by means of which any lateral displacement of the transverse conveyor belt (11) can be prevented or reduced.

11. A conveyor device according to claim 10, **characterised in that** when only one guide means (22) is provided the guide means (22) is disposed, as considered in the conveying direction (6) of the conveying device (1), at the end portion of the conveyor element (2) at which no receiving pocket (16) is disposed or constructed.

## Revendications

1. Un dispositif de transport (1) à la manière d'une voie ferrée pour le transport de produits en morceaux, en particulier pour le tri de parties de produits en morceaux, par exemple d'éléments de bagages, ou pour un système de transport backtrack (à piste de retour), où les éléments de produits en morceaux sont chacun fournis en un point d'alimentation, de façon générale individuellement à un emplacement de réception formé par au moins un élément de transport (1) muni d'une surface porteuse (5) et sont à délivrer à un point de délivrance latéralement de nouveau depuis le dispositif transporteur (1), une pluralité d'éléments de transport (2, 2', 2''), disposés les uns à la suite des autres dans la direction de porteur (6), reliés ensemble de façon articulée au moins par paires ou par groupes et susceptibles d'être entraînés conjointement, forment un tronçon de transport fermé en soi, mis en circulation horizontalement et/ou verticalement, guidé le long d'un guidage (3), dont les tronçons de transport dans les éléments de transport (2) forment chacun une face porteuse (5) formée par la face extérieure (8) du brin supérieur (9) soutenu sur sa face intérieure sur une tôle de glissement (17) d'un transporteur à courroie transversale (10, 10"), et dont la courroie de transport (11) susceptible d'être entraînée, de façon pouvant être commandée, transversalement par rapport à la direction de transport (6) du dispositif transporteur (1) est à entraîner à partir d'une position de transport non entraînée, dans la zone du point de délivrance respectif, l'entraînement étant tel qu'une partie de produit en morceau, soutenue par un transporteur à courroie transversale (10) et transportée dans la direction de transport (6) du dispositif transporteur (1), devrait être transportée vers le point de délivrance prédéterminé et de ce fait fourni par le dispositif transporteur (1) au point de délivrance prédéterminé et où les éléments transporteurs (2) sont munis sur un bord transversal (13), s'étendant sensiblement à angle droit par rapport à la direction de transport (6) du dispositif transporteur (1), de leur face porteuse (5), d'une plaque d'appui (14) ou analogue, horizontale, tournée dans la direction de transport (6) du dispositif transporteur (1), plaque d'appui recouvrant au moins pratiquement l'espace intermédiaire (15) en forme d'interstice existant chaque fois entre deux éléments de transport (2, 2'; 2', 2'') voisins l'un de l'autre et s'étendant dans la direction de transport (6) du dispositif transporteur (1), dans la zone de l'élément transporteur (2') voisin, à un degré faisant que ce dernier et la plaque d'appui (14) de l'élément transporteur (2) voisin se chevauchent l'un l'autre, **caractérisé en ce que** la plaque d'appui (14) d'un élément transporteur (2) est chaque fois chevauchée par le transporteur à courroie transversale (10') de l'élément transporteur (2') voisin et s'étend entre le brin supérieur (9) et le brin inférieur (9') du transporteur à courroie transversale (10') concerné, en une poche de logement (16), en forme d'interstice et disposée sensiblement parallèle à la face porteuse (5), formée au moins partiellement par la tôle de glissement (17) de ce transporteur à courroie transversale (10'), poche de logement (16) appartenant à l'élément transporteur (2') voisin.

2. Dispositif de transport selon la revendication 1, **caractérisé en ce que** la poche de logement (16) est délimitée, sur sa face inférieure, par la tôle de glissement (17) et, sur sa face supérieure, par la face inférieure du brin supérieur (9) du transporteur à courroie transversale (10').

3. Dispositif de transport selon la revendication 1, **caractérisé en ce que** la poche de logement (16) est délimitée, sur sa face inférieure et sur sa face supérieure, par la tôle de glissement (17).

4. Dispositif de transport selon la revendication 1, **caractérisé en ce que** la poche de logement (16) est délimitée, sur sa face supérieure, par une tôle de glissement (17) et, sur sa face inférieure, par un moyen d'appui (18) en forme de plaque, monté rigidement sur l'élément transporteur (2') voisin.

5. Dispositif de transport selon l'une des revendications précédentes, **caractérisé en ce que** la hauteur (h) de la poche de logement (16) n'est que légèrement supérieure à l'épaisseur (d) de la plaque d'appui (14) dans la zone de son tronçon de chevauchement (14').

6. Dispositif de transport selon l'une ou plusieurs des revendications précédentes, **caractérisé en ce que** les plaques d'appui (14), pour un dispositif de transport (1) dont le tronçon de transport parcourt au moins une courbe verticale, sont élastiques.

7. Dispositif de transport selon la revendication 6, **caractérisé en ce que** les plaques d'appui (14) sont formées d'un matériau à base de caoutchouc, le cas échéant armé.

8. Dispositif de transport selon la revendication 6, **caractérisé en ce que** les plaques d'appui (14) sont formées d'une tôle mince, en particulier d'une tôle d'acier.

9. Dispositif de transport selon l'une ou plusieurs des revendications précédentes, **caractérisé en ce que** la plaque de glissement (14) de chaque élément de transport (2) est chevauchée à un degré faisant que, également dans les courbes horizontales à rayon de courbure minimale, on obtient un chevauchement pratiquement complet et, ainsi, une face porteuse pratiquement fermée.

10. Dispositif de transport selon la revendication 3 ou 4, **caractérisé en ce que** la face supérieure de la plaque d'appui (14) présente chaque fois au moins un évidement (21) de préférence en forme de rainures s'étendant transversalement par rapport à la direction de transport (6) du dispositif de transport (1), respectivement dans la direction de transport (12, 12') du transporteur à courroie transversale (10, 10'), évidement (21) servant à loger un moyen de guidage (22) allongé, tel que, par exemple/en particulier, une courroie trapézoïdale, au moyen de laquelle on empêche ou on réduit tout déplacement latéral de la courroie de transport transversal (11).

11. Dispositif de transport selon la revendication 10, **caractérisé en ce que**, en cas d'agencement uniquement d'un moyen de guidage (22), le moyen de guidage (22) - observé dans la direction de transport (6) du dispositif de transport (1) - est disposé sur le tronçon d'extrémité de l'élément transporteur (2) sur lequel n'est disposée, respectivement réalisée, aucune poche de logement (16).
